# EUROPÄISCHE PATENTSCHRIFT

(11) **EP 0 522 373 B1**
(45) Veröffentlichungstag und Bekanntmachung des Hinweises auf die Patenterteilung: **07.12.1994**
(21) Anmeldenummer: 92110845.2
(22) Anmeldetag: 26.06.1992
(51) Int. Cl.: F16F 9/02

(54) **Gasfederungselement mit nachfüllbarem Schmiermittelvorrat**
Fluid die spring with lubricating means
Ressort à gaz avec graisseur

(30) Priorität: 09.07.1991 DE 4122632
(43) Veröffentlichungstag der Anmeldung: 13.01.1993
(73) Patentinhaber: ISKA WOLFGANG KATZ VERWALTUNGS-GmbH, D-78083 Dauchingen (DE)
(72) Erfinder: Katz, Wolfgang, W-7735 Dauchingen (DE)
(74) Vertreter: Patentanwälte Westphal, Buchner, Mussgnug Neunert, Göhring

(56) Entgegenhaltungen:
- DE-A- 1 750 212
- DE-A- 3 109 264
- DE-A- 4 008 863
- US-A- 4 005 763
- US-A- 4 529 181

## Beschreibung

Die Erfindung betrifft ein Gasfederungselement, insbesondere für Werkeuge zur spanlosen Formengebung, gemäß Oberbegriff des Anspruchs 1.

Derartige Gasfederungselemente werden für Werkzeuge der spanlosen Formgebung zur Erzeugung von Niederhalte-, Abstreif- und Auswerfbewegungen eingesetzt und substituieren in zunehmendem Maß Schrauben- oder Gummifedern. Gegenüber den herkömmlichen Federelementen besitzen sie eine Reihe von Vorteilen, wie z.B. eine längere Lebensdauer, geringeres Bauvolumen oder eine günstigere Federrate.

Die bisher bekannten Gasfederungselemente weisen einen Kolben auf, der in einem Zylinder verschieblich gelagert ist. Der Zylinder ist mit einem Druckgasreservoir verbunden, z.B. ist er in sogenannte Tankplatten gasdicht eingeschraubt. Im Druckgasreservoir befindet sich beispielsweise Stickstoff unter einem Druck von ca. 110 bar.

Der im Zylinder geführte Kolben ist gegen den Druck des Gases verschieblich. Der Kolben weist an der dem Kolbenboden gegenüber liegenden Seite eine Kolbenstange auf, die den Zylinder am Zylinderkopf durchdringt und über welche die Krafteinleitung erfolgt.

Durch Beaufschlagung der Kolbenstange wird der Kolben gegen den Druck des Druckgasreservoirs verschoben. Hierdurch wird das Gas weiter komprimiert, im obengenannten Falle steigt beispielsweise der Druck des Stickstoffes in der Tankplatte auf ca. 120 bar an, wenn das Volumen im Gasreservoir etwa das zehnfache des Hubvolumens des Kolbens beträgt.

Nach der Wegnahme der Belastung wird der Kolben durch den hohen Druck in seine Ausgangslage zurückgeschoben, wobei die gewünschte Niederhalte-, Abstreif- oder Auswerfbewegung vollzogen wird.

Obwohl derartige Gasfederungselemente im Werkzeugmaschinenbau zunehmend eine weite Verbreitung finden, ist das Problem der Schmierung der Zylinderlauffläche und der Dichtung noch nicht befriedigend gelöst worden.

Aus der US-PS 4,005,763 ist beispielsweise ein Schmiersystem für derartige Gasfederungselemente bekannt geworden. Es besteht zum einen aus einem Filz-Abstreifring, der in der Nähe des Kolbenbodens in einer Ringnut des Kolbens eingelegt ist. Zwei radial verlaufende Bohrungen stellen die Verbindung zu einem zentral und koaxial im Inneren des Kolbens angeordneten Docht her, der mit Öl getränkt ist.

Weiterhin weist der Zylinder an seinem oberen Ende ein Einlaß- und ein Auslaßventil auf. Es handelt sich um Ventile, die den Durchgang in einer Richtung zulassen und entgegengesetzt wirkend eingebaut sind. So erlaubt das Einlaßventil lediglich den Eintritt und das Auslaßventil lediglich den Austritt von Luft.

Im Zuströmbereich des Einlaßventils befindet sich eine Art Filter, der aus faserartigem Material, wie beispielsweise Filz, besteht und ölgetränkt ist.

Mit einsetzender Abwärtsbewegung des Kolbens zu Beginn des Belastungsvorgangs entsteht in dem sich bildenden Ringraum zwischen dem Zylinder und der Kolbenstange ein Unterdruck, wodurch Umgebungsluft angesaugt und über das Einlaßventil in den Ringraum eingesaugt wird. Beim Durchtritt durch das dem Einlaßventil vorgeschaltete ölgetränkte faserartige Material werden Öltröpfchen mitgerissen. Während der Dauer der Abwärtsbewegung des Kolbens wird somit dem Ringraum mit Öltröpfchen versetzte Luft zugeführt. Diese schlagen sich zum Teil an der Innenwand des Zylinders nieder und sorgen damit für eine Schmiermittelversorgung der Zylinderlauffläche.

Nach der Rücknahme der Belastung kehrt sich die Bewegungsrichtung des Kolbens um, und die im Ringraum befindliche Luft wird durch das Auslaßventil an die Umgebung abgegeben.

Obwohl mit einem derartigen Schmiersystem die Schmiermittelversorgung der Zylinderlauffläche prinzipiell möglich ist, ist jedoch eine Reihe von Nachteilen festzustellen. So wird bei jedem Kolbenhub ölhaltige Luft an die Umgebung abgegeben und führt zu einer erheblichen Verschmutzung der Umgebung. Auch handelt es sich um eine sogenannte Verlustschmierung, weil durch die austretende Luft Öl aus dem zu schmierendem Bereich nach außen getragen wird. Schließlich erfordert eine derartige Schmierung einen hohen Wartungsbedarf, da der Schmiermittelvorrat gering ist und durch das Aufnahmevermögen des Filzes beschränkt ist. Insbesondere bei Gasfederungselementen, die an Maschinen mit hoher Taktzahl installiert sind, ist der Schmiermittelvorrat rasch erschöpft. Dannach ist eine Demontage des Gasfederungselements erforderlich, um eine erneute Tränkung des Fasermaterials vornehmen zu können. Damit verbunden sind hohe Stillstandszeiten, die äußerst unerwünscht sind.

Zur Vermeidung des bei jedem Kolbenhub auftretenden Ölausstoßes ist aus der US-PS 4,529,181 bekannt, den zwischen dem Zylinder und der Kolbenstange befindlichen Ringraum im wesentlichen vollständig abzudichten. Die Schmiermittelversorgung erfolgt in der Weise, daß im Inneren des Kolbens eine Kammer vorgesehen ist, die über radiale Bohrungen mit dem Ringraum zwischen Zylinder und Kolben bzw. Kolbenstange in Verbindung stehen. Die Kammer im Kolbeninneren weist weiterhin einen ölgetränkten Docht auf.

Bei einsetzender Belastung, d.h. Abwärtsbewegung des Kolbens entsteht im Ringraum ein Unterdruck, wodurch Luft aus der im inneren des Kolbens befindlichen Kammer nach außen strömt. Gleichzeitig werden Öltröpfchen aus dem imprägnierten Docht mitgerissen und gegen die Zylinderlauffläche geschleudert.

Bei Einsetzen der Aufwärtsbewegung des Kolbens kehrt sich die Richtung der Luftströmung um, Luft strömt vom Ringraum in die Kammer zurück.

Auch dieses Schmiersystem weist den Nachteil auf, daß es relativ rasch erschöpft ist. Auch gestaltet sich die erforderliche Nachfüllung mit Schmiermittel besonders schwierig, weil der Docht im Inneren des Zylinders sehr schwer zugänglich ist und seine völlige Demontage voraussetzt. Somit eignet sich auch ein derartiges Schmiersystem nicht für den Einsatz moderner Werkzeugmaschinen mit hoher Taktzahl.

Der vorliegenden Erfindung lag deshalb das Problem zugrunde, ein Gasfederungselement der eingangs genannten Art zur Verfügung zu stellen, das die geschilderten Nachteile nicht mehr aufweist. Insbesondere soll es für den Dauereinsatz geeignet sein und das Nachfüllen von Schmiermittel auf einfache Art und Weise ermöglichen.

Gelöst wird dieses Problem erfindungsgemäß mit einem Gasfederungselement, das die Merkmale des Anspruchs 1 aufweist.

Vorteilhafte Ausführungsformen des Gasfederungselements sind durch die Merkmale der Unteransprüche angegeben.

Das erfindungsgemäße Gasfederungselement ermöglicht die Bildung eines Schmiermittelreservoirs, daß nach Art einer Dauerschmierung über lange Zeit betrieben werden kann, ohne ergänzt zu werden. Die in großen Abständen ggf. dennoch erforderliche Zufuhr von Schmiermittel erfolgt durch einen einfachen Kanal, der am oberen Ende des Zylinders angebracht und verschließbar ist. Er mündet unmittelbar in den Ringraum zwischen Zylinder und Kolben bzw. Kolbenstange. Das Volumen des Kanals und das (Rest-)Volumen des Ringraums bei der Stellung des Kolbens im unbelasteten Zustand (oberer Totpunkt) bilden ein Schmiermittelreservoir, das so bemessen ist, daß das Schmiermittel über einen längeren Zeitraum nicht ergänzt werden muß, d.h. Hubzahlen in Größenordnungen von einer Million und mehr möglich sind.

Weitere Vorteile ergeben sich aus der Beschreibung des Ausführungsbeispiels, das nachstehend näher erläutert wird.

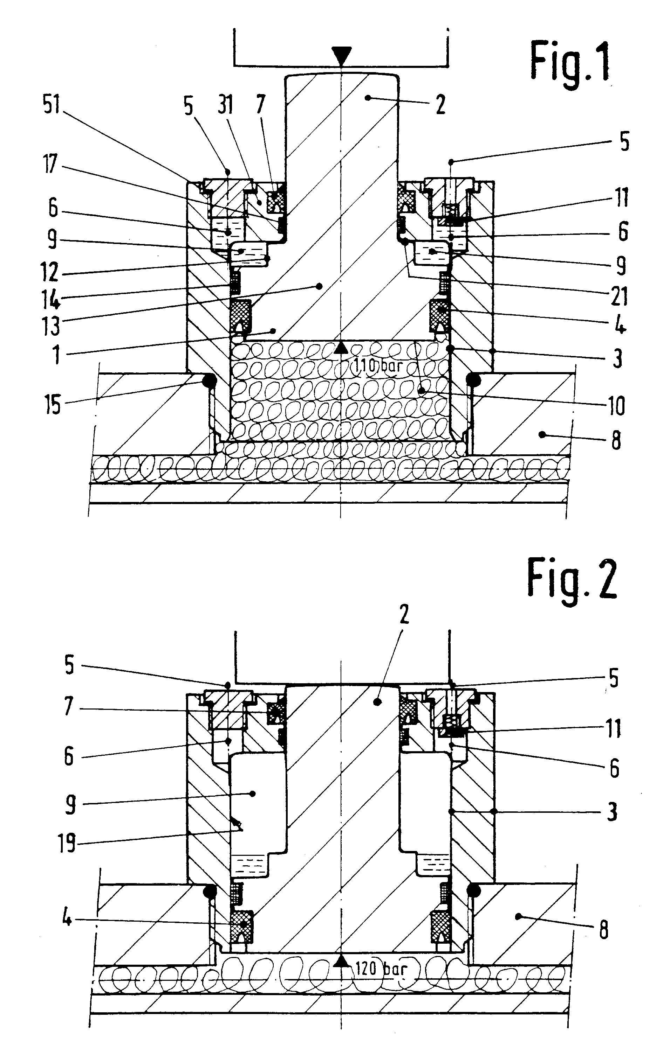

Es zeigen
- Figur 1: Schnittdarstellung des Gasfederungselements im entlasteten Zustand (oberer Totpunkt des Kolbens) und
- Figur 2: Schnittdarstellung des Gasfederungselements in maximal belastetem Zustand (unterer Totpunkt).

In einem Gasreservoir 8 in Form einer sogenannten Tankplatte befindet sich Stickstoff unter einem Druck von 110 bar. In die Tankplatte ist in einer Öffnung der Zylinder 3 eingeschraubt, eine Dichtung 15 verhindert das Austreten von Stickstoff an der Einschraubstelle.

Im Zylinder 3 befindet sich der Kolben 2. In unmittelbarer Nähe der dem Arbeitsraum, d.h. dem Stickstoff zugewandten Seite, dem Kolbenboden, ist ein umlaufender Dichtungsring 4 angebracht, der die Abdichtung zwischen Kolben 1 und Zylinder 3 übernimmt, so daß an dieser Stelle kein Stickstoff austreten kann. Der Kolben erstreckt sich, ausgehend vom Kolbenboden 10 über einen als Kolbenschaft 13 bezeichneten Bereich nach oben und geht in eine Kolbenstange 2 über, deren Durchmesser kleiner ist als der Durchmesser im Bereich des Kolbenschafts 13. Die Kolbenstange 2 durchdringt den Zylinder 3 koaxial im Bereich des Zylinderkopfs 31. Eine Ringdichtung 7, die in einer Nut des Zylinderkopfs 31 gehalten ist, liegt dicht an der Kolbenstange 2 an.

In entlasteter Position, d.h. im oberen Totpunkt wird der Kolben 1 gegen den Zylinderkopf 31 gedrückt. Als Anschlag dient eine Schulter 21, die am Ende des Kolbenschafts 13 am Übergang zur Kolbenstange 2 angeformt ist. Der Kolbenschaft 13 weist einen Absatz 12 auf, so daß in dieser Position des Kolbens 1 zwischen dem Kolben 1 und dem Zylinder 3 bzw. dessen Zylinderkopf 31 ein flacher Ringraum 9 entsteht.

Der Ringraum 9 kommuniziert mit Kanälen 6, die den Zylinderkopf 31 in axialer Richtung durchsetzen. Die Kanäle 6 sind mit Gewindestopfen 5 verschließbar.

Bei entfernten Gewindestopfen 5 wird der Schmiermittelvorrat, z.B. Öl eingefüllt. Dabei können sowohl der Ringraum 9 als auch die Kanäle 6 annähernd vollständig mit Schmiermittel gefüllt werden. Dies gelingt am einfachsten, wenn zwei Kanäle 6 vorgesehen sind. Der zweite Kanal 6 dient als Entlüftungskanal und das Schmiermittel kann ungehindert eingefüllt werden. Nach dem Einfüllen des Schmiermittels werden die Gewindestopfen 5 in die Kanäle 6 eingeschraubt. Durch Dichtungen 51 wird eine Abdichtung zur Umgebung erreicht.

Infolge einer Krafteinleitung über die Kolbenstange 2 wird der Kolben 1 abwärts bewegt. Hierdurch erhöht sich der Druck im Druckreservoir 8 von ca. 110 auf ca. 120 bar, wenn der Kolben 1 seine untere Totpunktlage erreicht hat.

Infolge der Abwärtsbewegung vergrößert sich der Ringraum zwischem dem Zylinder 3 und dem Kolben 1 bzw. der Kolbenstange 2. Gleichzeitig sinkt der Druck im Ringraum 9 ab, da durch die Dichtungen 51 und 7 ein Druckausgleich mit der umgebenden Atmosphäre verhindert wird. Hierdurch wird bewirkt, daß einerseits Schmiermittel, der Schwerkraft folgend, an der Zylinderlauffläche herabläuft und andererseits Ölnebel im Ringraum 9 gebildet wird, der sich an allen Flächen niederschlägt.

Nach der Verringerung der Last wird der Kolben 1 in seine Ausgangslage zurückgedrückt, und der Druck im Ringraum 9 steigt wieder auf den Ausgangswert an. Ein Ölabstreifring 14 im Bereich des Kolbenschafts 13 und ein weiterer Ölabstreifring 17 im Zylinderkopf 31 sorgen dafür, daß an der Zylinderlauffläche 19 und an der Kolbenstange 2 anhaftende Öltröpfchen bei der Aufwärtsbewegung des Kolbens 1 im Ringraum 9 verbleiben.

Hierdurch gelingt es, die Schmiermittelverluste extrem niedrig zu halten und eine Schmiereinrichtung nach Art einer Dauerschmierung zu realisieren. Da der Ringraum 9 allseitig abgedichtet ist, treten praktisch keine Schmiermittelverluste auf. Durch die Gewindestopfen 5 läßt sich auf einfache Art und Weise der Schmiermittelvorrat überprüfen und gegebenenfalls ergänzen, ohne das Gasfederelement demontieren zu müssen. Auch läßt sich hierdurch die Lebensdauer des Gasfederungselements erheblich verlängern, weil eine ausreichende Versorgung mit Schmiermittel unter allen Umständen gewährleistet ist. Ein Trockenlaufen, wie im Falle der ölgetränkten Filzdochte aus dem Stand der Technik läßt sich auf einfache Weise verhindern. Die Menge an Schmiermittelvorrat läßt sich durch eine entsprechende Dimensionierung des Absatzes 12 sowie der Kanäle 6 variieren.

Ebenso ist es möglich, anstelle des Absatzes 12 eine entsprechende Ausnehmung im Zylinderkopf 31 vorzusehen.

Vorteilhafterweise ist in einem der Gewindestopfen 5 ein Überdruckventil 11 integriert. Hierdurch ist es möglich, auf einfache Weise einen Indikator für eine Stickstoffleckage, z.B. infolge des Verschleißes der Dichtung 4 zur realisieren. Als derartiger Leckageindikator eignet sich beispielsweise eine blasenbildende Flüssigkeit, die die Ablaßöffnung des Überdruckventils 11 vollständig nach Art eines Flüssigkeitsfilms bedeckt. Gegebenenfalls austretendes Gas, beispielsweise Stickstoff infolge eines Dichtungslecks am Kolben 1, ist an der Blasenbildung sofort zu erkennen.

Je nach Anwendungsfall kann es erforderlich sein, den Flüssigkeitsfilm in gewissen Intervallen zu erneuern. In der Anwendung als besonders einfach haben sich sogenannte Leckagesprays erwiesen, die turnusmäßig auf die zu überprüfende Stelle, d.h. auf die Ablaßöffnung des Überdruckventils 11 aufgesprüht werden.

Als Überdruckventil 11 eignen sich insbesondere Kugelsitzventile, das ist sehr platzsparend aufgebaut und deshalb einfach in den Gewindestopfen 5 integriert werden können.

Der Ventilöffnungsdruck des Überdruckventils 11 beträgt ca. 2 bis 4 bar. Damit wird ein unbeabsichtiges Öffnen zuverlässig vermieden, andererseits werden Stickstoffleckagen bereits frühzeitig erkennbar.

## Patentansprüche

1. Gasfederungselement, insbesondere für Werkzeuge zur spanlosen Formgebung, bestehend wenigstens aus einem Druckgasreservoir (8), das mit Gas hohen Drucks gefüllt ist, einem Zylinder (3), der mit dem Druckgasreservoir (8) verbunden ist, einem Kolben (1), der in dem Zylinder gegen den Druck des Gases verschieblich gelagert ist und den Zylinder (3) am Zylinderkopf mit einem als Kolbenstange (2) ausgebildeten Krafteinleitungselement durchdringt, sowie einem Ringraum (9) zwischen dem Kolben und dem Zylinder, dessen Höhe und damit dessen Volumen in Abhängigkeit der Position des Kolbens (1) im Zylinder (3) veränderlich ist und sowohl gegenüber dem Druckgasreservoir als auch gegenüber der umgebenden Atmosphäre fluiddicht abgeschlossen ist, dadurch gekennzeichnet, daß im Zylinder (3) wenigstens ein verschließbarer Kanal (6) vorhanden ist, der in den Ringraum (9) mündet und daß der Ringraum (9) zumindest teilweise mit einem Schmiermittel gefüllt ist.

2. Gasfederungselement nach Anspruch 1, dadurch gekennzeichnet, daß im Zylinder (3) zwei Kanäle (6) vorhanden sind.

3. Gasfederungselement nach einem der vorstehenden Ansprüche, dadurch gekennzeichnet, daß die Kanäle (6) mit Gewindestopfen (5) verschließbar sind.

4. Gasfederungselement nach Anspruch 3, dadurch gekennzeichnet, daß wenigstens ein Gewindestopfen (5) ein Überdruckventil (11) aufweist.

5. Gasfederungselement nach Anspruch 4, dadurch gekennzeichnet, daß das Überdruckventil (11) als Kugelsitzventil ausgebildet ist.

6. Gasfederungselement nach Anspruch 4 oder 5, dadurch gekennzeichnet, daß der Ventilöffnungsdruck des Überdruckventils (11) etwa zwischen zwei und vier bar beträgt.

7. Gasfederungselement nach einem der Ansprüche 4 bis 6 dadurch gekennzeichnet, daß das Überdruckventil (11) mit einem Leckageindikator versehen ist.

8. Gasfederungselement nach Anspruch 7, dadurch gekennzeichnet, daß der Leckageindikator aus einem blasenbildenden Flüssigkeitsfilm besteht, der die Ablaßöffnung des Überdruckventils (11) vollständig bedeckt.

9. Gasfederungselement nach einem der vorstehenden Ansprüche, dadurch gekennzeichnet, daß der Ringraum (9) durch einen stirnseitigen Absatz (12) an dem den Kolbenschaft (13) darstellenden Bereich des Kolbens (1) gebildet wird.

10. Gasfederungselement nach einem der vorstehenden Ansprüche, dadurch gekennzeichnet, daß sich im Ringraum (9) Schmiermittel maximal in einer solchen Menge befindet, die dem Volumen des Ringraums in der entlasteten Stellung des Kolbens (10) (oberer Totpunkt) einschließlich der Kanäle (6) entspricht.

## Claims

1. A pneumatic spring component, especially for tools for non-cutting shaping, consisting at least of a compressed gas tank (8) filled with high pressure gas, a cylinder (3) connected to the compressed gas tank (8), a piston (1) slidably mounted in the cylinder against the pressure of the gas and penetrating the cylinder (3) at the cylinder head with a force introduction component constructed as piston rod (2), and also an annular space (9) between the piston and the cylinder, the height and therefore the volume of which can be altered in dependence on the position of the piston (1) in the cylinder (3) and which is also sealed in fluid-tight manner both in relation to the compressed gas tank and also in relation to the surrounding atmosphere,
**characterised in that** at least one sealable duct (6), which opens into the annular space (9), is provided in the cylinder (3),
**and in that** the annular space (9) is filled at least partially with a lubricant.

2. A pneumatic spring component according to Claim 1,
**characterised in that** two ducts (6) are provided in the cylinder (3).

3. A pneumatic spring component according to one of the preceding Claims,
**characterised in that** the ducts (6) can be closed by threaded plugs (5).

4. A pneumatic spring component according to Claim 3,
**characterised in that** at least one threaded plug (5) has a relief valve (11).

5. A pneumatic spring component according to Claim 4,
**characterised in that** the relief valve (11) is constructed as a ball seated valve.

6. A pneumatic spring component according to Claim 4 or 5,
**characterised in that** the valve opening pressure of the relief valve (11) lies roughly between two and four bar.

7. A pneumatic spring component according to one of Claims 4 to 6,
**characterised in that** the relief valve (11) is provided with a leakage indicator.

8. A pneumatic spring component according to Claim 7,
**characterised in that** the leakage indicator consists of a bubbling film of liquid completely covering the outlet aperture of the relief valve (11).

9. A pneumatic spring component according to one of the preceding Claims,
**characterised in that** the annular space (9) is formed by an end step (12) on the region of the piston (1) representing the piston shaft (13).

10. A pneumatic spring component according to one of the preceding Claims,
**characterised in that** the maximum quantity of lubricant found in the annular space (9) corresponds to the volume of the annular space in the relieved position of the piston (10) (top dead centre) including the ducts (6).

## Revendications

1. Elément de suspension élastique à gaz, notamment pour des outils de formage sans copeaux, constitué au moins d'un réservoir de gaz sous pression (8), qui est rempli de gaz sous pression élevée, d'un cylindre (3), qui est relié au réservoir de gaz sous pression (8), d'un piston (1) qui est logé en coulissement dans le cylindre en opposition à la pression du gaz et qui passe dans le cylindre (3) ménagé dans la culasse avec un élément de transfert de force sous forme de bielle (2), ainsi que d'une chambre annulaire (9) entre le piston et le cylindre, dont la hauteur et ainsi son volume est variable en fonction de la position du piston (1) dans le cylindre (3) et qui est hermétique vis-à-vis du réservoir de gaz sous pression, ainsi que vis-à-vis de l'atmosphère environnante caractérisé en ce qu'il existe dans le cylindre (3) au moins un canal (6) obturable, qui débouche dans la chambre annulaire (9) et que la chambre annulaire (9) est remplie au moins en partie de lubrifiant.

2. Elément de suspension élastique à gaz, selon la revendication 1, caractérisé en ce que deux canaux (6) existent dans le cylindre (3).

3. Elément de suspension élastique à gaz selon l'une des revendications précédentes, caractérisé en ce qu'on peut obturer les canaux (6) avec des bouchons filetés(5).

4. Elément de suspension élastique à gaz selon la revendication 3, caractérisé en ce qu'au moins un bouchon fileté (5) présente une soupape de sécurité (11).

5. Elément de suspension élastique à gaz selon la revendication 4, caractérisé en ce que la soupape de sécurité (11) est en forme de soupape à bille.

6. Elément de suspension élastique à gaz selon la revendication 4 ou 5, caractérisé en ce que la pression d'ouverture de soupape de la soupape de surpression ou de sécurité (11) est comprise entre environ deux et quatre bars.

7. Elément de suspension élastique à gaz selon l'une des revendications 4 à 6, caractérisé en ce que la soupape de surpression ou de sécurité (11) est munie d'un indicateur de fuite.

8. Elément de suspension élastique à gaz selon la revendication 7, caractérisé en ce que l'indicateur de fuite est constitué d'un film de liquide formant des bulles, qui recouvre complètement l'orifice de sortie de la soupape de surpression ou de sécurité (11).

9. Elément de suspension élastique à gaz selon l'une des revendications précédentes, caractérisé en ce que la chambre annulaire (9) est constituée par un rebord frontal (12) sur lequel est formé le domaine du piston (1) représentant l'arbre du piston (13).

10. Elément de suspension élastique à gaz selon l'une des revendications précédentes, caractérisé en ce que le lubrifiant de la chambre annulaire (9) s'y trouve au maximum en une quantité qui correspond au volume de la chambre annulaire en position déchargée du piston (10) (point mort supérieur) y compris les canaux (6).
